# EUROPEAN PATENT APPLICATION

(11) **EP 1 345 434 A1**
(43) Date of publication of application: **17.09.2003**
(21) Application number: 02386006.7
(22) Date of filing: 15.03.2002
(51) Int. Cl.: H04N 7/16

(54) **System for message transfer to remote terminal**

(71) Applicant: Dritsopoulos, Elias, 15562 Holargos (GR)
(72) Inventor: Dritsopoulos, Elias, 15562 Holargos (GR)

(57) **Abstract**

This system can transmit both digital picture and sound through either wire or wireless two-way communication in preselected long distance points by use of specialized high-tech systems. In this way, the representation of messages in preselected screens is succeeded at any desirable moment and for a predetermined period of time.

This is done through a central control unit monitored by an exclusive information technology system, which constitutes its primary function code. This central control unit is on line with a digital message receiver unit, which can receive TV-satellite messages, transform them into high-density digital messages and transmit them to digital screens, allowing the spectators to select the desired projection on each screen separately.

## Description

This invention concerns the preparation, processing, transmission and projection of digital picture and sound on preselected points by use of high technology systems, succeeding in the representation of messages, pictures and high density sound on a preselected point during a certain period of time. The transmission of message is done using two-way communication by phone through hired lines.

The prevailing technology of low resolution of conventional television allows the transmission of digital picture and sound in remote areas either through satellite or directly to the digital set, as it uses a special projection frequency.

The existing technology allows the transmission of a text either as a set picture or an interchangeable video picture of low digital resolution, even when using a telephone line or a special wire. The low picture resolution, however, does not allow any exploitation of information (in the case of a video documentary or an advertisement), as the existing system of one-way communication (off-line) offers no flexibility, dynamics and direct information.

Up to present, the most prevalent and economical solution for the projection of logos or advertising material on preselected points entails the on-site existence of transmission systems. The provisioning of new material to these systems is done through videotape.

### Description of the invention

What makes this invention special is the fact that it can transmit and project long distance Digital Video Boards (D.V.B.), each message being different on each screen, unlike the television signal of digital television sets, which is the same for each screen. The transmission of digital picture and sound on preselected long distance points is done in an on line mode, which results in the renewal of messages or advertisements in a very short period of time, using remote control and depending as little as possible on humans, both for transmitting and for the technical control of the function of the system.

The system of projection of D.V.Bs. is based on a network of high-speed hired lines, high resolution screens (plasma, TFT or alike) and on servers used to control and operate the screens. Everything is connected to a protocol of high speed (IEEE-1394/Fire Wire) and is controlled through a central processing unit using specially developed software (D.V.B. Control System).

Big screens are used for mass projection, the size of which depends on the special needs and space. It is possible to use a line of screens in places of mass attendance like airports, courts or stadiums, which are controlled through a processor, receiving on line information from the central processing unit through a special telephone line. Both CPU and processor can:
a) Transmit the same information on all screens or different information on each screen, depending on Video-on-demand, overcoming any problems of overloading.
b) Receive any TV signal from any channel (satellite or not), transform it into a digital signal and transmit it on the digital screens.
c) The central processing unit can change the program projected on line of screens, adding corrected or altered video clips with no pause. This can be applied on a 24-hour basis, while the lack of human interference minimizes mistakes, resulting in the dynamic projection of message, its non-stop flow and its total control.
d) The system can be activated through photo-electric cells in accordance to preselected programming e.g. the projection of a certain message or advertisement can be activated when the prospective spectator is found opposite the screen for a predetermined short period of time.
In supermarkets or departments stores, all the above mentioned applications offer the prospective consumer the opportunity to preselect the topic of informative projection either from the posted list of grouped products codified on a remote control or, if a certain product is concerned, the projection can be held through the time delay method, when the presence of the consumer activates the projector. In the case of the grouped products codified on the remote control, two different circuits are activated by pressing one key: the first one activates the screen and the second one is the D.V.B. circuit (through the activation of the screen).
The central processing unit can distinguish the department store demanding projection given the code of the screen and the priority of the request and then the process of projection is activated.
Both the quality and the length of the projection depend on two fundamental factors: the producer-manufacturer that is advertised and the seller. The consumer, as the final receiver of the preselected logo, gives a social dimension to the final prevalence of remarkable products in the market. The rationale behind D.V.B. enables the consumer to distinguish only the remarkable products. It also enables successful and daring manufacturers (e.g. of foodstuff industry) to directly approach the consumer and inform him on important matters as the hygiene of the industry or the policy of the industry to conduct chemical analysis of the chemical preservative substances of their products. In accordance to this rationale, the department store can adopt the policy to inform its customers on possible special offers of certain products, using the system described above.
As a special part of the clientele of such department stores are due to be people with disabilities, D.V.B. functions in accordance to the level of reduced sound pollution. For this reason the visual picture of the advertisement will be provided with subtitles, while the sound will be received from wireless hearing-aids. The hearing-aids can also function as the turning on switches for people deprived of speech or hearing inclined to remain unnoticed to the public. This is done with the attachment of an X-ray transmitter on the hearing-aids, along with a turning on switch and a receiver for the sound of the picture. Following this method, each consumer wishing to be informed, uses the hearing-aids to activate the screen, keeping his impairment away from the public.

### Equipment needed

The equipment needed for the successful function of the D.V.B. method is:
A. Plasma, TFT, VGA or alike screens.
B. Transforming the above mentioned screens into IEEE-1394 devices, allowing the reception of Digital Video.
C. High speed hired lines, wire or wireless, to transmit the information to be projected.
D. Control Unit for one or more screens on the projection point (Fire NAS Control Station). This unit receives Digital Information from the MAIN FRAME, television or satellite signal and teletext. It can also transform all signals (television, satellite or teletext) in High resolution Video and in IEEE-1394 communication protocol, thus enabling the transmission of signals to Digital Screens. It can also transmit the same or different electronic messages in a line of up to 64 screens, with no distortion of the information-picture.
E. Special wires of IEEE-1394 technology to achieve the demanded speed to transfer data to visual circuits (Intracet), developing on the screens.
F. A Central Control System with exclusive software. The Central Control System is the heart of the system as it controls the efficient function of the screens and the control unit on the projection points (Fire Nas), it deals with long distance problems, it transmits digital information and determines the order of projection (script), it conducts on-line video editing, it determines the charges for each client according to time and advertisement, it can be connected to the ERP system of the company for technical and financial control. In short, it is the system that supports D.V.Board function and offered services.

## Claims

1. System of process control and message transfer on a preselected point by use of a code network of two way communication using high technology consisting of a central processing unit with primary code software and a digital information receiver unit, functioning both as a receiver from the central processing unit and as a receiver of television or satellite signal transforming it into high density digital signal and it also involves high resolution systems for decodification, transformation and reconstruction of digital signals and it is controlled from a processor with highly-developed software, using high speed protocol through either wire or wireless communication to transmit signals to high density screens and, moreover, is also consists of screens for digital projections, which, no matter where they are placed, are part of the above mentioned system and, therefore, both their function and clarity are inspected and corrected by the central processing unit that is also able to identify any demand for projection and it is **characterized by** the fact that the beginning of the projection of an advertisement with picture and sound can be controlled and broadcast by a central processing unit on many screens simultaneously in the same or different places or regions such as department stores, airports, railway stations, courts and stadiums, on many different topics according to the interests of social groups or customers and according to demand in certain places, for example information on products in department stores or sports news in courts and stadiums, and by the fact that this system enables each consumer to select the particular subject of interest, activating the screen through photo-cells, when being opposite the screen for a certain period of time and in places of mass attendance, such as department stores which are also visited daily by different groups of people, people with special disabilities, in need of low sound pollution facilities, people with hearing or vision problems or deaf-and-dumb people, advertisements are projected with subtitles and the system also provides for wireless hearing-aids, enabling the user to receive sound and to use a key to determine the beginning of the projection process through an X-ray transmitter and helping deaf-and-dumb people to switch on the screen using the hearing aids and to avoid further publicity of their disability.
